Europäisches Patentamt

European Patent Office

Office européen des brevets

(19)

(11) Publication number: **0 205 211**
**A2**

(12) **EUROPEAN PATENT APPLICATION**

(21) Application number: 86200955.2

(22) Date of filing: 31.05.86

(51) Int. Cl.⁴: **E05F 11/38**

(30) Priority: 06.06.85 IT 2106085

(43) Date of publication of application:
17.12.86 Bulletin 86/51

(84) Designated Contracting States:
AT BE CH DE FR GB IT LI LU NL SE

(71) Applicant: **ROCKWELL GOLDE ITALIANA S.p.A.**
**Via Briantea, 342**
**I-22032 Albese con Cassano Como(IT)**

(72) Inventor: **Montecchi, Massimo**
**Via Fornacetta, 5**
**I-22040 Anzano Del Parco Como(IT)**

(74) Representative: **Riccardi, Sergio**
**Riccardi & Co. Via Macedonio Melloni, 32**
**I-20129 Milano(IT)**

(54) Door window regulator driving system.

(57) The invention relates to a door window regulator driving system, substantially comprising a set of balls (3) compacted inside a closed loop sheath (4), said balls (3) being moved in either direction through a manual handle (14) or electric control, so as to move up and down the window glasses (9) of a motor vehicle.

Fig. 1

## "DOOR WINDOW REGULATOR DRIVING SYSTEM"

The present invention relates to a system adapted to drive the door window regulator for motor vehicles, either with manual control powered with electric motor and reduction unit or with an air or oil actuated worm gear and screw unit.

It is well known that door window regulator assemblies, and more particularly the electrically powered ones, are using sheathed Bowden cables, which in the long run may have problems of smooth sliding or uniformity of operation.

Accomodation of the whole assembly is also sometimes difficult in view of the wide curvature of the sheathed cable and the reduced space available inside the door panel.

The present system uses a thick set of balls, arranged inside a closed loop sheath. Said balls are closely compacted to one another so as to form a rack that may be hand actuated through a handle or power controlled by a motor reduction unit, both acting on a pinion provided with a suitably shaped toothing. Movement of said ball rack may also be obtained through an air or oil actuated worm gear and screw unit.

This ball actuated system allows to arrange the sheath inside the door panel with very narrow bends or turns and to make also devices with bilateral control, but in a cheaper way in comparison with the special spiralled cables now used for this purpose. Flexibility of the system of the present invention allows also to use it with any window size and any window travel length to be controlled.

In practice the door window regulator driving system of the present invention may also be embodied in different ways falling however in the scope of the invention, which will hereinafter described in detail in a non limiting example of its embodiment, reference being had to the accompanying sheet of illustrative drawings, in which:

Fig. 1 is merely diagrammatic view of a ball rack actuated by a manual mechanism;

Fig. 2 is a detailed view of the mounting bracket supporting the window glass and connected to one ball;

Fig. 3 is a cross-sectional view of the detail of the sheathed ball to which the mounting bracket is fixed; and

Fig. 4 is a merely diagrammatic view of a ball rack actuated by a fluid operated worm gear and screw unit.

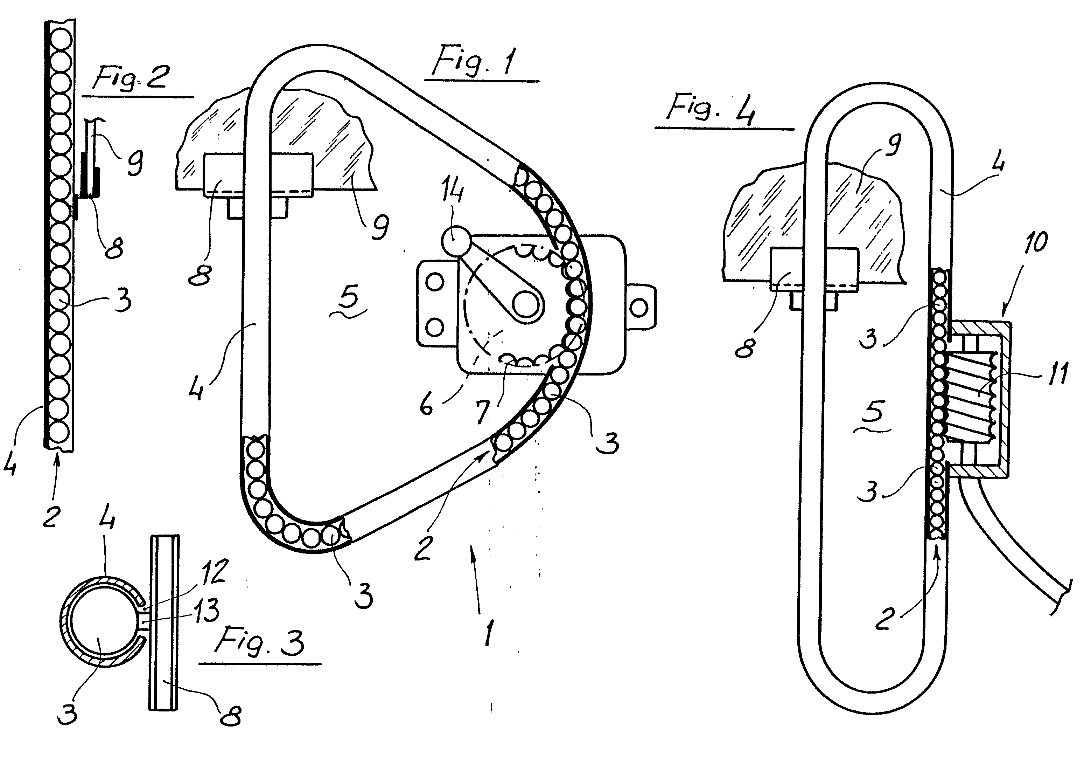

With reference now to Figs. 1, 2 and 3, the driving system 1 of the present invention comprises a rack 2 consisting of a set of balls 3 made of metal or plastics, arranged inside a sheath 4 having a continuous open lip or slit 12, which can be seen in Fig. 3.

Said sheath 4 forms a closed loop or circuit 5, allowing the balls 3 to be circulated continuously, being driven by rotation of a pinion 6 provided with a suitable toothing 7, actuated by a handle 14 or an electric motor and reduction unit (not shown).

Clearly in a suitable position, a mounting bracket 8 supporting the window glass 9 is fixed to one or more balls by means of a pin 13 passing through said open lip or slit 12, so that the glass will slide up and down during the circulation of the balls. Referring now to Fig. 4, for actuating the system it is also possible to use a device 10 acting as a little air or oil operated turbine, provided with worm screw 11, the pitch of the screw being equal to the diameter of the balls used in the system.

It is to be pointed out that the detailed description of the present embodiments does not limit the scope of the invention, but on the contrary it has to be understood that many modifications, additions, variations or substitutions may be resorted to the system of the present invention, without altering however its spirit or departing from its scope of protection, as it is defined in the appended claims.

### Claims

1) Door window regulator driving system, characterized by the fact of comprising a set of compacted balls (3) so as to form a rack (2) which can be actuated through a pinion (6) and handle (14) or an electric motor and reduction unit.

2) System according to Claim 1, characterized by the fact that said balls (3) are arranged and compacted in a continuous way, inside a flexible tubular sheath (4) with open lip or slit (12), so as to form a closed loop.

3) System according to Claim 1, characterized by the fact that the movement of the balls (3) may be obtained through an air or oil actuated worm gear and screw (11).

4) System according to any of the preceding Claims, characterized by the fact that the mounting bracket (8) for the window glass (9) is fixed to one or more balls (3) by a pin (13) passing through said open lip or slit (12).

5) Door window regulator driving system, as hereinbefore described and as illustrated in the figures of the annexed sheet of drawings, for the above mentioned objects.

Fig. 1

Fig. 2

Fig. 3

Fig. 4